# EUROPEAN PATENT APPLICATION

(11) **EP 3 840 208 A1**
(43) Date of publication of application: **23.06.2021**
(21) Application number: 20213272.6
(22) Date of filing: 11.12.2020
(51) Int. Cl.: H02M 7/5387, H02M 7/797, H02M 1/32, H02M 1/00

(54) **INVERTER DEVICE**

(30) Priority: 16.12.2019 JP 2019226242
(71) Applicant: JTEKT CORPORATION, Chuo-ku, Osaka-shi, Osaka 542-8502 (JP)
(72) Inventor: NIWA, Masafumi, Osaka-shi,, Osaka 542-8502 (JP); KOJIMA, Yoshihiro, Osaka-shi,, Osaka 542-8502 (JP); WAKAO, Hisaaki, Osaka-shi,, Osaka 542-8502 (JP); NAKASHIMA, Shintaro, Osaka-shi,, Osaka 542-8502 (JP)
(74) Representative: TBK

(57) **Abstract**

An inverter device (4) includes: a plurality of switching elements (421, 422, 423, 424, 425, 426); a substrate (40) including a plurality of input terminal pads (401) and a plurality of output terminal pads (402); a plurality of voltage sensors (431, 432, 433, 434, 435, 436) that is provided to correspond to the plurality of switching elements (421, 422, 423, 424, 425, 426); and a controller (41) configured to output an on-off signal to the plurality of switching elements (421, 422, 423, 424, 425, 426). The controller (41) is configured to acquire measurement results from the plurality of voltage sensors (431, 432, 433, 434, 435, 436). The controller (41) is configured to detect that a solder crack has been generated in at least one of the plurality of input terminal pads (401) or the plurality of output terminal pads (402).

## Description

### BACKGROUND OF THE INVENTION

### 1. Field of the Invention

The invention relates to an inverter device including a plurality of switching elements.

### 2. Description of Related Art

In the related art, for example, an inverter device including a plurality of switching elements in which an inter-terminal voltage (a collector-emitter voltage V_{CE} or a drain-source voltage V_{DS}) of each switching element is measured and an overcurrent of the corresponding switching element is detected and an operation of an inverter circuit is stopped when the measured inter-terminal voltage is great is known as described in Japanese Unexamined Patent Application Publication No. 2018-148635 (JP 2018-148635 A).

Japanese Unexamined Patent Application Publication No. 2014-228330 (JP 2014-228330 A) discloses an inverter device including a voltage detecting unit that measures a voltage between a Kelvin emitter terminal of an insulated-gate bipolar transistor (IGBT) mounted on a substrate and a beam lead, a current detecting unit that detects an emitter current of the IGBT, and a solder crack detecting unit that detects a crack of solder which solders the emitter terminal and the beam lead on the basis of a resistance value calculated from the voltage measured by the voltage detecting unit and the emitter current detected by the current detecting unit.

### SUMMARY OF THE INVENTION

When a function of detecting a solder crack as described in JP 2014-228330 A is additionally provided in the inverter device having a function of detecting an overcurrent using an inter-terminal voltage of a switching element as described in JP 2018-148635 A, the voltage detecting unit that measures a voltage before and after a part with which a terminal of each switching element is soldered needs to be additionally provided, which increases costs, and a substrate is increased in size with an increase of the number of mounted components.

The invention can detect generation of a solder crack in a terminal of a switching element while curbing an increase of the number of components.

An aspect of the invention provides an inverter device. The inverter device includes a plurality of switching elements, a substrate, a plurality of voltage sensors, and a controller. The plurality of switching elements is configured to switch between an on state and an off state in accordance with an on/off signal which is input to a signal terminal. The plurality of switching elements is configured such that a current flows from an input terminal to an output terminal in the on state thereof. The substrate includes a plurality of input terminal pads and a plurality of output terminal pads. The plurality of input terminal pads is soldered with the input terminals of the plurality of switching elements. The plurality of output terminal pads is soldered with the output terminals of the plurality of switching elements. The plurality of voltage sensors is provided to correspond to the plurality of switching elements. The plurality of voltage sensors is configured to measure inter-pad voltages between the plurality of input terminal pads and the plurality of output terminal pads in the on state. The controller is configured to output the on/off signal to the plurality of switching elements. The controller is configured to acquire results of measurement from the plurality of voltage sensors. The controller is configured to detect that a solder crack has been generated in at least one of the plurality of input terminal pads and the plurality of output terminal pads by a comparison operation process using the results of measurement from the plurality of voltage sensors.

With this configuration, it is possible to curb an increase of the number of components and to detect generation of a solder crack in a terminal of a switching element.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view illustrating an example of a configuration of an electric oil pump including an inverter device according to an embodiment of the invention;
FIG. 2A is a sectional view along line IIA-IIAin FIG. 1;
FIG. 2B is a sectional view along line IIB-IIB in FIG. 1;
FIG. 3 is a circuit diagram illustrating an example of a configuration of the inverter device;
FIG. 4A is a perspective view illustrating a first FET and a peripheral part thereof;
FIG. 4B is a sectional view illustrating a solder crack;
FIG. 5 is a graph illustrating an example of inter-pad voltages of first to sixth FETs; and
FIG. 6 is a flowchart illustrating an example of an operation of a controller according to a modified example.

### DETAILED DESCRIPTION OF EMBODIMENTS

### Embodiment

An embodiment of the invention will be described below with reference to the accompanying drawings. The embodiment described below is a specific example suitable for embodying the invention and various technical matters which are technically preferable are specifically described. However, the technical scope of the invention is not limited to the specific examples.

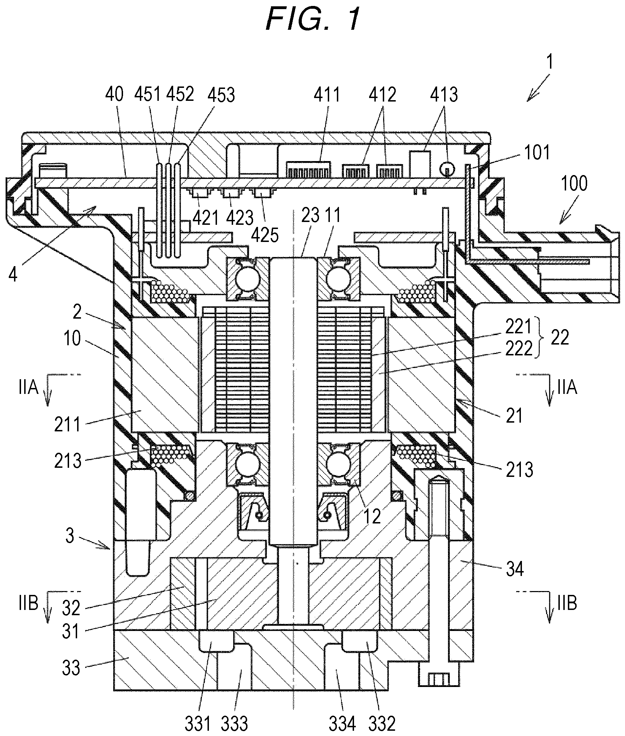

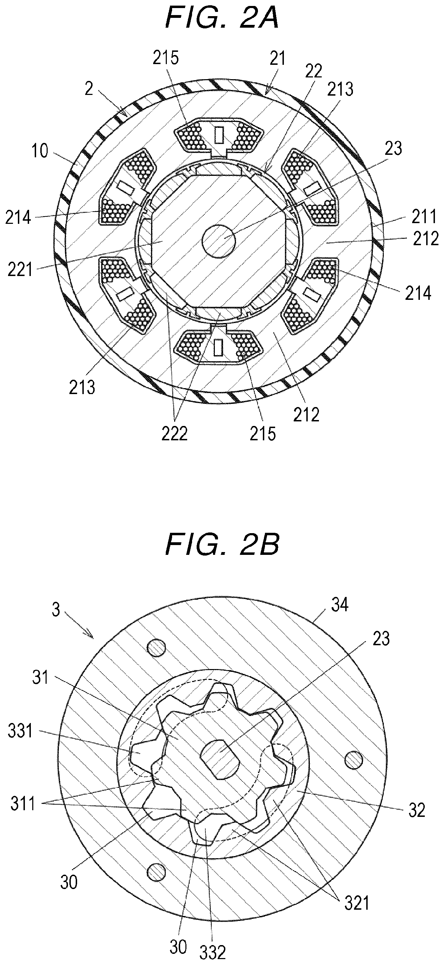

FIG. 1 is a sectional view illustrating an example of a configuration of an electric oil pump including an inverter device according to an embodiment of the invention. FIG. 2A is a sectional view along line IIA-IIA in FIG. 1, and FIG. 2B is a sectional view taken line IIB-IIB in FIG. 1.

The electric oil pump 1 is mounted, for example, in a vehicle, and is used to operate an actuator of a transmission or to feed oil for cooling a driving electric motor. The electric oil pump 1 includes an electric motor 2, an oil pump 3 that is activated by the electric motor 2, an inverter device 4 that supplies a PWM-controlled three-phase AC current to the electric motor 2, and a housing 10 in which the electric motor 2 and the inverter device 4 are accommodated.

The electric motor 2 is a three-phase AC motor and includes a stator 21 that is fixed to an inner circumference of the housing 10, a rotor 22 that can rotate inside the stator 21, and a shaft 23 that rotates with the rotor 22. In the stator 21, a stator core 211 includes six teeth 212, and a U-phase winding 213, a V-phase winding 214, and a W-phase winding 215 are wound on every two teeth 212. The rotor 22 includes a rotor core 221 and a plurality of permanent magnets 222 that is fixed to an outer circumference of the rotor core 221. The shaft 23 is supported by a pair of bearings 11 and 12.

The oil pump 3 includes an inner rotor 31 that includes a plurality of external teeth 311 and rotates with the shaft 23, an outer rotor 32 including a number of internal teeth 321 greater than the number of external teeth 311 of the inner rotor 31, a pump plate 33 that is provided with an intake port 331 and a discharge port 332 communicating with a plurality of pump chambers 30 formed between the inner rotor 31 and the outer rotor 32, and a pump housing 34 accommodating the inner rotor 31 and the outer rotor 32. An intake flow passage 333 that guides oil from the outside to the intake port 331 and a discharge flow passage 334 that guides oil discharged to the discharge port 332 to the outside are formed on the pump plate 33.

The inverter device 4 includes a substrate 40 and electronic components that are mounted on the substrate 40, and supplies a three-phase AC current to the electric motor 2 via bus bars 451 to 453. The electronic components mounted on the substrate 40 include a central processing unit (CPU) 411, a memory IC 412, passive elements 413 such as capacitors or resistors, and field effect transistors (FETs) 421 to 426 which will be described later. A DC voltage which is a predetermined voltage (for example, DC 12 V) is supplied as a source voltage from a connector pin 101 of a connector 100 which is provided in the housing 10 to the inverter device 4.

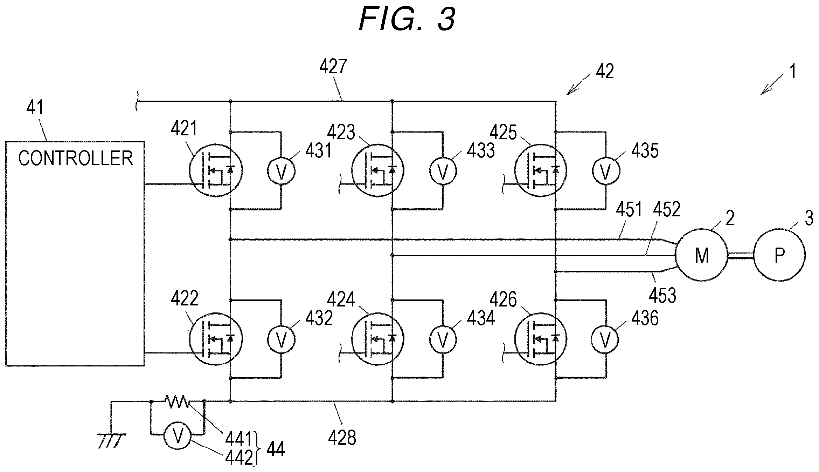

FIG. 3 is a circuit diagram illustrating an example of a configuration of the inverter device 4. The inverter device 4 includes a controller 41 that is constituted by the CPU 411 and the memory IC 412, an inverter circuit 42, first to sixth voltage sensors 431 to 436, and a current sensor 44. The controller 41 performs processes which will be described later by causing the CPU 411 to execute a program stored in the memory IC 412.

In the inverter circuit 42, the first to sixth FETs 421 to 426 are connected in a three-phase bridge manner, a bus bar 451 that supplies a U-phase current is connected between the first FET 421 and the second FET 422, a bus bar 452 that supplies a V-phase current is connected between the third FET 423 and the fourth FET 424, and a bus bar 453 that supplies a W-phase current is connected between the fifth FET 425 and the sixth FET 426.

The first to sixth FETs 421 to 426 are one type of switching elements in the invention. In this embodiment, the first to sixth FETs 421 to 426 are N-channel MOSFETs. The switching elements constituting the inverter circuit 42 are not limited to FETs and, for example, power transistors such as insulated-gate bipolar transistors (IGBTs) may be used.

A DC voltage from the connector pin 101 is supplied to an upper bus 427 of the inverter circuit 42. A lower bus 428 of the inverter circuit 42 is electrically grounded, and a current flowing in the lower bus 428, that is, the sum of currents flowing in the first to sixth FETs 421 to 426, is measured by the current sensor 44. The current sensor 44 includes a shunt resistor 441 and a voltage sensor 442, and the voltage sensor 442 measures a potential difference between both ends of the shunt resistor 441. The controller 41 can acquire the result of measurement from the voltage sensor 442 as a result of measurement from the current sensor 44.

Each of the first to sixth FETs 421 to 426 includes a gate terminal serving as a signal terminal, a drain terminal serving as an input terminal, and a source terminal serving as an output terminal, and switches between an on state and an off state in accordance with an on/off signal which is input to the gate terminal. A current flows from the drain terminal to the source terminal in the on state, and the current is cut off in the off state. The controller 41 outputs the on/off signal to the gate terminal of each of the first to sixth FETs 421 to 426 and supplies a sinusoidal three-phase AC current to the electric motor 2 by PWM control.

The substrate 40 includes a plurality of signal terminal pads with which the gate terminals of the first to sixth FETs 421 to 426 are soldered, a plurality of input terminal pads with which the drain terminals of the first to sixth FETs 421 to 426 are soldered, and a plurality of output terminal pads with which the source terminals of the first to sixth FETs 421 to 426 are soldered. The first to sixth voltage sensors 431 to 436 are provided to correspond to the first to sixth FETs 421 to 426, and can measure an inter-pad voltage between the corresponding input terminal pad and the corresponding output terminal pad in the on state.

Since the first to sixth FETs 421 to 426 have specific on-resistance which is electric resistance between the drain and the source in the on state thereof, the inter-pad voltages measured by the first to sixth voltage sensors 431 to 436 change depending on the currents (drain currents) flowing between the drain terminals and the source terminals of the first to sixth FETs 421 to 426. The on-resistance is, for example, 7 mΩ. The controller 41 can acquire the results of measurement of the inter-pad voltage from the first to sixth voltage sensors 431 to 436, and detects generation of an overcurrent abnormality in which an overcurrent such as a through-current flows based on the acquired results of measurement of the inter-pad voltage. Specifically, when the inter-pad voltage is higher than a predetermined threshold value, an overcurrent abnormality is detected and all the first to sixth FETs 421 to 426 are switched to the off state to stop driving of the inverter circuit 42.

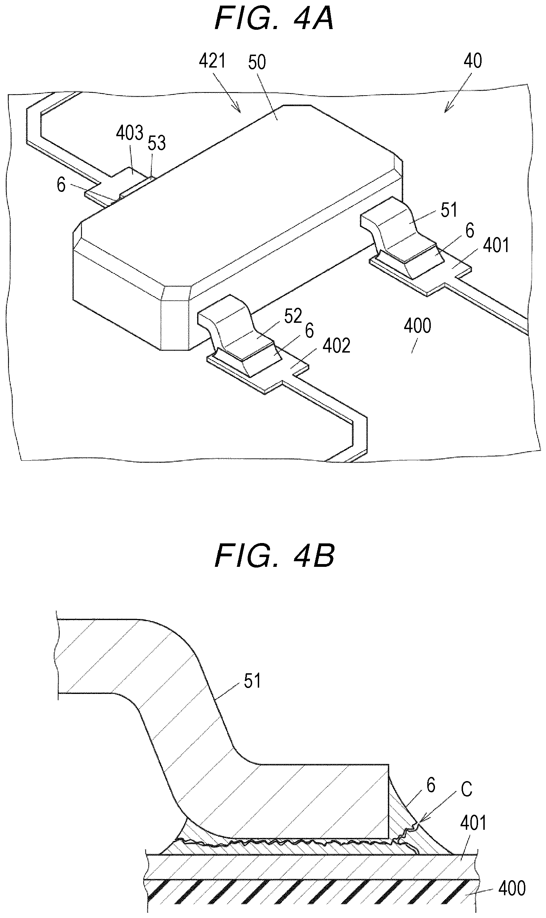

FIG. 4A is a perspective view illustrating the first FET 421 and a peripheral part thereof. In FIG. 4A, a body 50, a drain terminal 51, a source terminal 52, and a gate terminal 53 of the first FET 421 and an input terminal pad 401, an output terminal pad 402, and a signal terminal pad 403 of the substrate 40 are illustrated. The input terminal pad 401, the output terminal pad 402, and the signal terminal pad 403 are formed on the surface of a panel-shaped substrate 400 which is formed of an insulating resin such as a glass epoxy. On the substrate 400, a plurality of input terminal pads 401, a plurality of output terminal pads 402, and a plurality of signal terminal pads 403 are formed to correspond to the first to sixth FETs 421 to 426.

The surface and wiring patterns of the substrate 400 are subjected to insulating coating with a solder resist (not illustrated), and the input terminal pads 401, the output terminal pads 402, and the signal terminal pads 403 are not subjected to insulating coating. By solder 6, the drain terminals 51 are connected to the input terminal pads 401, the source terminals 52 are connected to the output terminal pads 402, and the gate terminals 53 are connected to the signal terminal pads 403.

Here, since a linear expansion coefficient of the body 50 of the first FET 421 or the like is different from a linear expansion coefficient of the substrate 400, a crack (cracking) may be generated in the solder 6, for example, when the temperature changes repeatedly due to heat emitted from the electric motor 2 or an influence of an outside air temperature. For example, when a crack is generated in the solder 6 connecting the drain terminal 51 to the input terminal pad 401, electric resistance between the drain terminal 51 and the input terminal pad 401 increases and the inter-pad voltage measured by the first voltage sensor 431 increases, for example, fourfold even when the drain current is constant. There is concern about erroneous detection of an overcurrent abnormality even if an overcurrent has not actually flowed due to the increase of the inter-pad voltage. The same is true when a crack is generated in the solder 6 connecting the source terminal 52 to the output terminal pad 402.

In the sectional view illustrated in FIG. 4B, for example, a crack C which is generated in the solder 6 connecting the drain terminal 51 and the input terminal pad 401 is illustrated. The crack C may be generated in the whole solder 6 or may be generated in a part thereof. When such a crack C is generated and electrical connection between the drain terminal 51 and the input terminal pad 401 is secured, it is preferable to continuously drive the inverter circuit 42 without stopping driving of the inverter circuit 42.

Therefore, in this embodiment, when a solder crack is generated in one of the plurality of input terminal pads 401 or the plurality of output terminal pads 402, the controller 41 detects the solder crack by a comparison operation process using the results of measurement from the first to sixth voltage sensors 431 to 436. More specifically, when the inter-pad voltage of one FET (for example, the first FET 421) out of the first to sixth FETs 421 to 426 is conspicuously greater than the inter-pad voltages of the other FETs (for example, the second to sixth FETs 422 to 426), generation of a solder crack in the one FET is detected.

Here, "conspicuously greater" means, for example, that the inter-pad voltage of the first FET 421 is two or more times an average value of the inter-pad voltages of the second to sixth FETs 422 to 426. Alternatively, for example, when the inter-pad voltage of the first FET 421 is two or more times the smallest inter-pad voltage of the inter-pad voltages of the second to sixth FETs 422 to 426, it may be determined that the inter-pad voltage of the first FET 421 is conspicuously greater. Since the inter-pad voltages change with an increase or a decrease of the drain currents due to switching of the first to sixth FETs 421 to 426, at least peak values during one turn in electrical angle of the electric motor 2 are used as the inter-pad voltages in the comparison operation process.

The controller 41 increases the threshold value for detecting an overcurrent abnormality for an FET in which generation of a solder crack has been detected out of the first to sixth FETs 421 to 426. For example, when the inter-pad voltage of the first FET 421 measured by the first voltage sensor 431 increases to be conspicuously greater than the inter-pad voltages of the second to sixth FETs 422 to 426 measured by the second to sixth voltage sensors 432 to 436 and generation of a solder crack in the first FET 421 has been detected, the threshold value for detecting an overcurrent abnormality for the first FET 421 is set to be greater than threshold values for detecting an overcurrent abnormality for the second to sixth FETs 422 to 426. In other words, a determination condition for detecting an overcurrent abnormality is relaxed for an FET in which generation of a solder crack has been detected.

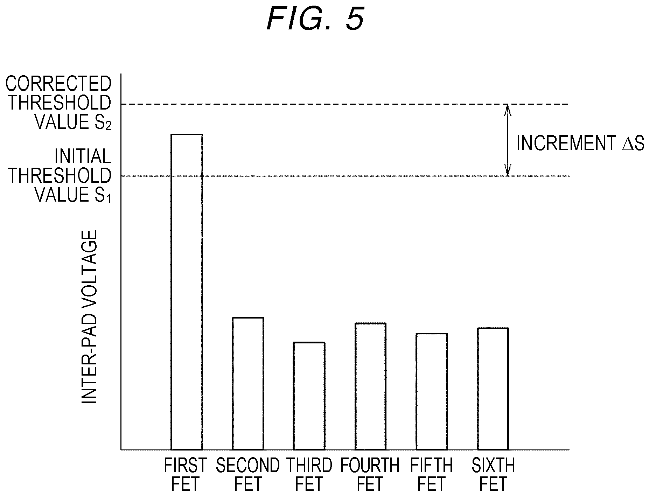

FIG. 5 is a graph illustrating an example of comparison between the inter-pad voltages (peak values) of the first to sixth FETs 421 to 426. Here, an example in which a crack is generated in the solder 6 connecting the drain terminal 51 of the first FET 421 to the input terminal pad 401 or the solder 6 connecting the source terminal 52 thereof to the output terminal pad 402 and the inter-pad voltage of the first FET 421 increases is illustrated, and an initial threshold value S₁ which is an initial value of the threshold value before the determination condition of an overcurrent abnormality is relaxed and a corrected threshold value S₂ which is the threshold value after the determination condition of an overcurrent abnormality is relaxed are illustrated on the vertical axis. The threshold value for determining an overcurrent abnormality is kept at the initial threshold value S₁ for the second to sixth FETs 422 to 426.

When a solder crack in the first FET 421 has been detected, the controller 41 sets the corrected threshold value S₂ to a value greater than the inter-pad voltage of the first FET 421. An increment ΔS which is an increase of the threshold value from the initial threshold value S₁ to the corrected threshold value S₂ is set, for example, based on the inter-pad voltage of the first FET 421 when a solder crack in the first FET 421 has been detected. Here, the corrected threshold value S₂ is a value less than the inter-pad voltage when a through-current actually flows, and the inter-pad voltage of the first FET 421 is greater than the corrected threshold value S₂ and an overcurrent abnormality is detected when a through-current flows in the first FET 421.

In this way, by changing the threshold value for determining an overcurrent abnormality from the initial threshold value S₁ to the corrected threshold value S₂, a margin (a degree of margin) for detection of an overcurrent abnormality decreases but the inverter circuit 42 can continue to be driven to activate the electric motor 2 and the oil pump 3 even when a solder crack is generated. For example, when a through-current flows in the first FET 421, the same current flows in any of the second to sixth FETs 422 to 426 and thus an overcurrent abnormality can also be detected.

According to the aforementioned embodiment, since generation of a solder crack can be detected using the results of measurement from the first to sixth voltage sensors 431 to 436 which are provided to detect an overcurrent abnormality, it is possible to curb an increase of the number of components and to detect a solder crack in the drain terminal 51 or the source terminal 52 of any of the first to sixth FETs 421 to 426.

When generation of a solder crack has been detected, an alarm may be issued. Alternatively, an FET in which a solder crack has been generated may be set to a normally off state and the electric motor 2 may be operated with three-phase driving switched to two-phase driving.

### (Modified example)

A modified example of the embodiment will be described below. In this modified example, the controller 41 detects generation of a solder crack through comparison between resistance values which are calculated from the results of measurement from the first to sixth voltage sensors 431 to 436 and the result of measurement from the current sensor 44 for each of the first to sixth FETs 421 to 426. When the resistance value calculated for one FET out of the first to sixth FETs 421 to 426 is conspicuously greater than the resistance values calculated for the other FETs, generation of a solder crack in the one FET is detected.

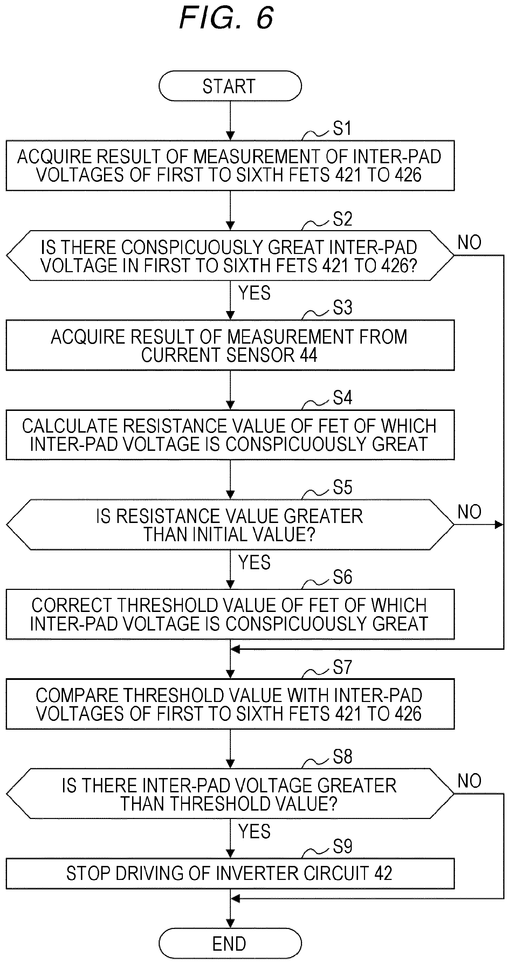

FIG. 6 is a flowchart illustrating an example of an operation which is performed by the controller 41 according to this modified example. In the process flow illustrated in the flowchart, the controller 41 first acquires the inter-pad voltages of the first to sixth FETs 421 to 426, that is, the results of measurement from the first to sixth voltage sensors 431 to 436 (Step S1). Then, the controller 41 determines whether there is an inter-pad voltage which is conspicuously greater out of the inter-pad voltages of the first to sixth FETs 421 to 426 (Step S2).

When it is determined in Step S2 that there is an inter-pad voltage which is conspicuously greater (S2: YES), the controller 41 acquires the result of measurement from the current sensor 44 (Step S3) and calculates a resistance value of the FET in which the inter-pad voltage is determined to be conspicuously greater, that is, a quotient obtained by dividing the inter-pad voltage by the drain current (inter-pad voltage/drain current) (Step S4). The drain current of the FET can be calculated based on the result of measurement from the current sensor 44 and the on/off states of the first to sixth FETs 421 to 426.

Then, the controller 41 determines whether the resistance value calculated in Step S4 is greater than an initial value (Step S5). This initial value corresponds to the on-resistance of the FET, and, for example, a value measured at the time of a performance test after manufacturing of the inverter device 4 can be used. In Step S5, when a difference between the resistance value calculated in Step S4 and the initial value is a significant difference equal to or greater than a predetermined value which is set in consideration of an influence of temperature change or the like, it is determined that the resistance value calculated in Step S4 is greater than the initial value.

When it is determined in Step S5 that the resistance value calculated in Step S4 is greater than the initial value (S5: YES), the controller 41 increases the threshold value for detecting an overcurrent abnormality of the FET in which the inter-pad voltage has been determined to be conspicuously greater to correct it (Step S6).

Then, the controller 41 compares the inter-pad voltage with the threshold value for detecting an overcurrent abnormality for each of the first to sixth FETs 421 to 426 (Step S7). Even when the determination result in any of Steps S2 and S7 is negative (NO), the controller 41 also performs the processes subsequent to Step S7. Then, the controller 41 determines whether there is an inter-pad voltage which is greater than the threshold value for detecting an overcurrent abnormality (Step S8), determines that an overcurrent abnormality has been generated when there is an inter-pad voltage greater than the threshold value (S8: YES), and stops driving of the inverter circuit 42 (Step S9).

In this way, it is possible to detect generation of a solder crack with high accuracy using the result of measurement from the current sensor 44.

(Supplementary note) While an embodiment of the invention has been described above, the embodiment does not limit the invention associated with the appended claims. It should be noted that all combinations of the features described above in the embodiment are not necessary for means for solving the problems of the invention.

The invention can be appropriately modified by omitting some elements or adding or replacing an element without departing from the gist thereof.

An inverter device (4) includes: a plurality of switching elements (421, 422, 423, 424, 425, 426); a substrate (40) including a plurality of input terminal pads (401) and a plurality of output terminal pads (402); a plurality of voltage sensors (431, 432, 433, 434, 435, 436) that is provided to correspond to the plurality of switching elements (421, 422, 423, 424, 425, 426); and a controller (41) configured to output an on-off signal to the plurality of switching elements (421, 422, 423, 424, 425, 426). The controller (41) is configured to acquire measurement results from the plurality of voltage sensors (431, 432, 433, 434, 435, 436). The controller (41) is configured to detect that a solder crack has been generated in at least one of the plurality of input terminal pads (401) or the plurality of output terminal pads (402).

## Claims

1. An inverter device (4) **characterized by** comprising:
a plurality of switching elements (421, 422, 423, 424, 425, 426) configured to switch between an on state and an off state in accordance with an on-off signal which is input to a signal terminal, the plurality of switching elements (421, 422, 423, 424, 425, 426) being configured such that a current flows from an input terminal to an output terminal in the on state thereof;
a substrate (40) including a plurality of input terminal pads (401) and a plurality of output terminal pads (402), the plurality of input terminal pads (401) being soldered with the input terminals of the plurality of switching elements (421, 422, 423, 424, 425, 426), the plurality of output terminal pads (402) being soldered with the output terminals of the plurality of switching elements (421, 422, 423, 424, 425, 426);
a plurality of voltage sensors (431, 432, 433, 434, 435, 436) that is provided to correspond to the plurality of switching elements (421, 422, 423, 424, 425, 426), the plurality of voltage sensors (431, 432, 433, 434, 435, 436) being configured to measure inter-pad voltages between the plurality of input terminal pads (401) and the plurality of output terminal pads (402) in the on state; and
a controller (41) configured to output the on-off signal to the plurality of switching elements (421, 422, 423, 424, 425, 426), the controller (41) being configured to acquire results of measurement from the plurality of voltage sensors (431, 432, 433, 434, 435, 436),
wherein the controller (41) is configured to detect that a solder crack has been generated in at least one of the plurality of input terminal pads (401) and the plurality of output terminal pads (402) by a comparison operation process using the results of measurement from the plurality of voltage sensors (431, 432, 433, 434, 435, 436).

2. The inverter device (4) according to claim 1, **characterized in that** the controller (41) is configured to detect that the solder crack is generated in one switching element when the inter-pad voltage of the one switching element out of the plurality of switching elements (421, 422, 423, 424, 425, 426) is conspicuously greater than the inter-pad voltages of the other switching elements.

3. The inverter device (4) according to claim 1 or 2, **characterized in that** the controller (41) is configured to detect an overcurrent abnormality indicating that an overcurrent flows in one switching element out of the plurality of switching elements (421, 422, 423, 424, 425, 426) when the inter-pad voltage of the one switching element is greater than a predetermined threshold value, and
**characterized in that** the controller (41) is configured to set the threshold value to be greater than an initial value for a switching element in which the generation of the solder crack has been detected out of the plurality of switching elements (421, 422, 423, 424, 425, 426) when the generation of the solder crack has been detected.

4. The inverter device (4) according to claim 1, **characterized by** further comprising:
a current sensor (44) configured to measure the current flowing in the plurality of switching elements (421, 422, 423, 424, 425, 426),
**characterized in that** the controller (41) is configured to calculate a resistance value from the result of measurement from the plurality of voltage sensors (431, 432, 433, 434, 435, 436) and the result of measurement from the current sensor (44) for each of the plurality of switching elements (421, 422, 423, 424, 425, 426), and
**characterized in that** the controller (41) is configured to detect the generation of the solder crack through comparison of the resistance values calculated for the plurality of switching elements (421, 422, 423, 424, 425, 426).

5. The inverter device (4) according to claim 4, **characterized in that** the controller (41) is configured to detect the generation of the solder crack when the resistance value calculated for one switching element of the plurality of switching elements (421, 422, 423, 424, 425, 426) is conspicuously greater than the resistance values calculated for the other switching elements.
